## Europäisches Patentamt

**European Patent Office**

**Office européen des brevets**

(19)

(11) Veröffentlichungsnummer: **0 045 927**

A1

# EUROPÄISCHE PATENTANMELDUNG

(12)

(21) Anmeldenummer: **81106072.2**

(22) Anmeldetag: **03.08.81**

(51) Int. Cl.³: **G 01 F 11/16**

(30) Priorität: **08.08.80 DE 3030152**

(43) Veröffentlichungstag der Anmeldung:
**17.02.82 Patentblatt 82/7**

(84) Benannte Vertragsstaaten:
**CH DE FR GB IT LI SE**

(71) Anmelder: **SIEMENS AKTIENGESELLSCHAFT Berlin
und München**
**Postfach 22 02 61**
**D-8000 München 22(DE)**

(72) Erfinder: **Stadler, Heinz**
**Mettnauer Strasse 19**
**D-8000 München 60(DE)**

(72) Erfinder: **Heinzl, Alfred, Ing.(grad.)**
**Geigenbergerstrasse 29**
**D-8000 München 71(DE)**

(54) **Dosiervorrichtung.**

(57) Zur Abgabe von definierten geringen Mengen einer flüssigen oder pulverförmigen Masse, wie beispielsweise Gießharz, ist in einem Gehäuse (1) ein Kolben (5) mit einer Einschnürung (10) vorgesehen, wobei das fehlende Volumen der Einschnürung (10) der Dosiermenge entspricht. Diese Einschnürung (10) wird als Dosierabschnitt durch den Kolbenhub von einem Vorratsraum (2) durch eine Ausgußdüse (4) bis zur Düsenöffnung (4a) bewegt.

FIG 1

EP 0 045 927 A1

SIEMENS AKTIENGESELLSCHAFT
Berlin und München

Unser Zeichen
VPA 80 P 2 3 9 4 E

Dosiervorrichtung

Die Erfindung bezieht sich auf eine Dosiervorrichtung zum Ausbringen einer definierten Dosiermenge einer Gießmasse, insbesondere einer Flüssigkeit, mit in einem Gehäuse vorgesehenen Vorratsraum, einer vom Vorratsraum durch die Gehäusewand nach außen führenden Ausgußdüse sowie einem im Gehäuse gelagerten Kolben.

Derartige Dosiervorrichtungen werden beispielsweise benötigt, um zum Abdichten von elektrischen Bauelementen kleine, definierte Mengen von Gießharz an bestimmte Stellen des Bauelementes zu bringen. Bekannte Dosiereinheiten mit kleinen, ventilgesteuerten Kolben sind jedoch sehr teuer und erfordern einen hohen Wartungsaufwand. Daneben ist es auch bereits bekannt, die Gießmasse mittels Druckluft aus dem Vorratsraum auszupressen, wobei die Dosiermenge über die Auspreßzeit gesteuert wird. Die Dosiergenauigkeit ist dabei allerdings stark von der Viskosität der Gießmasse abhängig.

Aufgabe der Erfindung ist es, eine Dosiervorrichtung der eingangs erwähnten Art zu schaffen, die einfach und billig in Herstellung und Wartung ist und die insbesondere zur Dosierung kleiner Gießharzmengen geeignet ist. Mit dieser Vorrichtung soll es darüber hinaus möglich sein, auch Dosiermengen, die kleiner sind als ein Tropfen, auszubringen.

Erfindungsgemäß wird diese Aufgabe dadurch gelöst, daß die Ausgußdüse als Führungszylinder für das freie Ende des Kolbens ausgebildet ist, daß der Kolben einen Do-

Pr 1 Fra

sierabschnitt mit einer gegenüber dem Führungszylinder verminderten Querschnitt aufweist, wobei der Dosierabschnitt in Axialrichtung des Kolbens kürzer als der Führungszylinder ist und im Volumen der Querschnittsverminderung der definierten Dosiermenge entspricht, und daß der Kolbenhub so bemessen ist, daß der Dosierabschnitt zwischen dem Vorratsraum und der Öffnung der Ausgußdüse hin und her bewegbar ist.

Durch die erfindungsgemäße Gestaltung des Kolbens und der Ausgußdüse wird erreicht, daß der Kolben jeweils nur die gewünschte definierte Menge an Gießmasse ausstößt. Dabei drückt der Kolben die Gießmasse nicht mit seinem freien Ende durch die Ausgußdüse, sondern mit einem vom freien Ende abgesetzten Dosierabschnitt, der im Querschnitt vermindert ist und auf diese Weise das Dosiervolumen bestimmt. Der durch die Querschnittsverminderung vom Kolbendurchmesser fehlende Raum des Dosierabschnittes füllt sich mit Gießmasse, wenn der Dosierabschnitt mit dem Vorratsraum in Verbindung steht; danach wird diese Gießmasse mit dem Kolben durch die Ausgußdüse aus dem Gehäuse befördert und an die gewünschte Stelle gebracht.

Der Dosierabschnitt des Kolbens wird zweckmäßigerweise durch eine allseitige Einschnürung gebildet. Auf diese Weise füllt sich der Dosierraum am schnellsten mit der Gießmasse, und die Gießmasse fließt nach dem Ausstoßen des Kolbens auch am schnellsten über das freie Ende des Kolbens ab. Am freien Ende des Kolbens kann eine Kuppe oder Spitze angeformt sein, um das Abfließen der Gießmasse zu erleichtern. Eine Spitze kann auch unmittelbar mit dem Gegenstand in Berührung gebracht werden, auf den die Gießmasse abfließen soll. Dies ist besonders dann von Vorteil, wenn die Dosiermenge kleiner als ein Tropfen ist.

Zweckmäßig ist es weiterhin, wenn der Kolben im Gehäuse zusätzlich zur Führung in der Ausgußdüse noch eine Lagerung besitzt. Der Dosierabschnitt des Kolbens, der die Dosiermenge bestimmt, kann natürlich jeweils unterschiedlichen Dosiermengen angepaßt werden. Dies kann durch Einsatz verschiedener Kolben in ein und dasselbe Gehäuse geschehen. Zweckmäßig kann es auch sein, den Dosierabschnitt in ein und demselben Kolben veränderlich zu gestalten, beispielsweise durch ein verschiebbares oder einschraubbares Kolbenende.

Zum gleichzeitigen Ausbringen mehrerer Dosiermengen auf benachbarte Stellen ist es weiterhin zweckmäßig, in einem Gehäuse mehrere Ausgußdüsen mit jeweils erfindungsgemäß gestalteten Kolben anzuordnen. Sollen dabei die auszubringenden Dosiermengen unterschiedlich sein, so können die in einem Gehäuse angeordneten Kolben jeweils unterschiedliche Dosierabschnitte besitzen.

Die Erfindung wird nachfolgend an Ausführungsbeispielen anhand der Zeichnung näher erläutert. Es zeigen
Fig. 1 bis 3 die schematische Darstellung einer erfindungsgemäßen Dosiervorrichtung in drei verschiedenen Arbeitsstellungen des Kolbens,
Fig. 4 die Anwendung einer Dosiervorrichtung für sehr kleine Mengen,
Fig. 5 eine Mehrfachdosiervorrichtung.

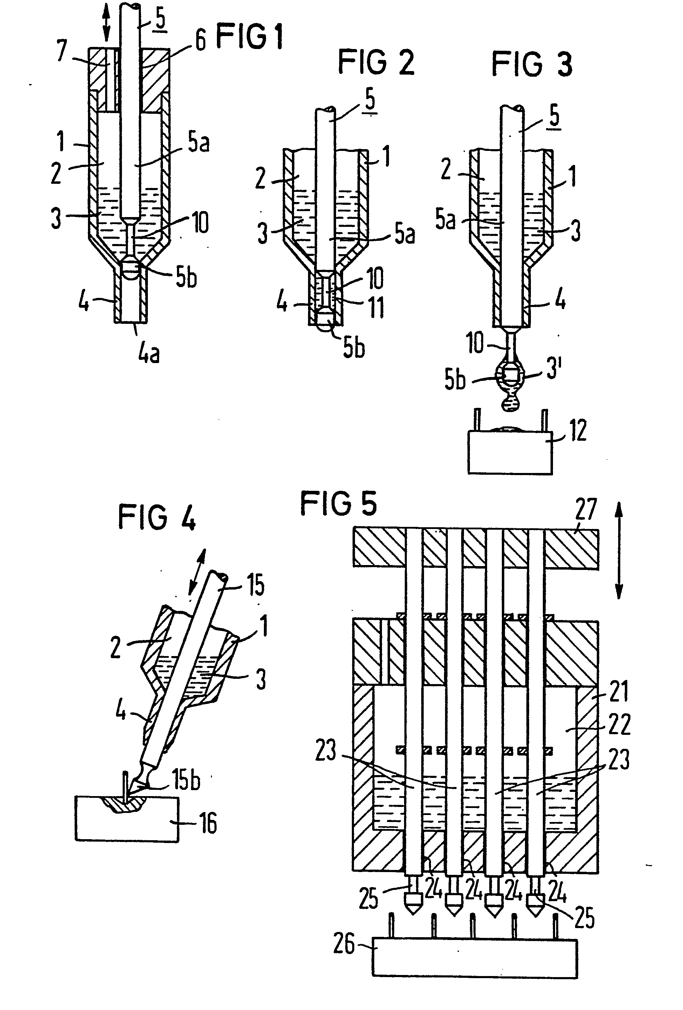

Die in den Fig. 1 bis 3 dargestellte Dosiervorrichtung besitzt ein Gehäuse 1 mit einem Vorratsraum 2 für das zu dosierende Gießharz 3. Der Vorratsraum 2 mündet am unteren Ende des Gehäuses 1 in eine Ausgußdüse 4, die gleichzeitig als Führungszylinder für einen Kolben 5 dient. Am oberen Ende des Gehäuses 1 ist dieser Kolben 5 außerdem in einem Lager 6 geführt. Eine Belüftungsöffnung 7 sorgt für Druckausgleich im Vorratsraum 2. Der Vorrat an Gießharz 3 wird durch eine nicht weiter dargestellte Öffnung nachgefüllt.

Zur Dosierung des Gießharzes besitzt der Kolben 5 zwischen seinem Schaft 5a und dem freien Ende 5b einen Dosierabschnitt in Form einer Einschnürung 10. Dieser Dosierabschnitt kann mit dem Kolbenhub zwischen dem Vorratsraum 2 und der Düsenöffnung 4a hin und her bewegt werden.

Die Funktionsweise der Dosiervorrichtung ist aus der unterschiedlichen Stellung des Kolbens 5 in den Fig. 1 bis 3 zu ersehen. Bei Fig. 1 ist der Kolben 5 in seiner obersten Stellung. Die Einschnürung 10 ist mit Gießharz umflossen. Das freie Ende 5b, dessen Durchmesser dem Durchmesser der Ausgußdüse 4 angepaßt ist und im übrigen mit dem Durchmesser des Kolbenschaftes 5a übereinstimmt, dichtet den Vorratsraum 2 gegenüber der Ausgußdüse 4 ab.

Mit dem nächsten Arbeitsschritt nimmt der Kolben 5 die Stellung nach Fig. 2 ein. Er ist dabei soweit gesenkt, daß der Dosierabschnitt in Form der Einschnürung 10 ganz in der Ausgußdüse 4 liegt. Das Dosiervolumen 11 ist also bestimmt durch den Raum zwischen der Einschnürung 10 und der Wand der Ausgußdüse 4. Das Dosiervolumen ist mit dem Kolbenschaft 5a vom Vorratsraum und mit dem Kolbenende 5b vom Außenraum getrennt.

Fig. 3 zeigt schließlich die dritte Arbeitsstufe. Dabei ist der Kolben 5 noch weiter abgesenkt, so daß der Dosierabschnitt 10 ganz aus der Ausgußdüse 4 geschoben ist. Die dosierte Vergußmasse 3' kann über das Ende 5b des Kolbens abfließen und auf das darunter liegende Bauelement 12 tropfen. Ist die Vergußmasse abgeflossen, so kann der Kolben wieder gehoben und mit seinem Dosierabschnitt in den Vorratsraum gezogen werden.

0045927

80 P 2 3 9 4 E

Die Fig. 4 zeigt eine leichte Abwandlung gegenüber Fig. 3 in einer Anwendung für sehr kleine Dosiermengen, bei denen die Tropfengröße nicht erreicht wird. Das Ende 15b des Kolbens 15 ist dabei mit einer Spitze versehen. Dabei kann der Kolben 15 soweit an das Bauelement 16 herangeschoben werden, daß die Spitze 15b das Bauelement bzw. einen abzudichtenden Anschlußstift berührt. Die Vergußmasse fließt dann über die Spitze 15b ab, selbst wenn die Dosiermenge kleiner als ein Tropfen ist.

Fig. 5 zeigt einen Mehrfachdosierer. Dabei sind in einem Gehäuse 21 mit einem Vorratsraum 22 mehrere Kolben 23 angeordnet, welche über einen gemeinsamen Träger 27 gleichzeitig betätigt werden können. Die einzelnen Kolben 23 sind in gleicher Weise ausgebildet wie der Kolben 5 nach Fig. 1, und sie besitzen auch Dosierabschnitte 25, die dem Dosierabschnitt 10 in Fig. 1 entsprechen und in Ausgußdüsen bzw. Führungen 24 bewegbar sind. Mit dieser Mehrfachdosiervorrichtung können beispielsweise mehrere voneinander unabhängige Dosiermengen gleichzeitig auf ein Bauelement 26 gebracht werden, um dort beispielsweise einzelne Anschlußstifte für sich abzudichten. Soweit bei einem solchen Bauelement unterschiedliche Öffnungen mit unterschiedlichen Dosiermengen verschlossen werden sollen, ist es mit der Mehrfachdosiervorrichtung nach Fig. 5 auch möglich, verschiedene Kolben 23 mit unterschiedlichen Dosierabschnitten 25 zu verwenden. Der Arbeitsablauf des Dosierens vollzieht sich im übrigen auch bei der Mehrfachdosiervorrichtung wie bei der einfachen Dosiervorrichtung nach den Fig. 1 bis 3.

7 Patentansprüche
5 Figuren

0045927

Patentansprüche

1. Dosiervorrichtung zum Ausbringen einer definierten Dosiermenge einer Gießmasse, insbesondere einer Flüssigkeit, mit in einem Gehäuse vorgesehenem Vorratsraum, einer vom Vorratsraum durch die Gehäusewand nach außen führenden Ausgußdüse sowie einem im Gehäuse gelagerten Kolben, d a d u r c h g e k e n n z e i c h n e t , daß die Ausgußdüse (4) als Führungszylinder für das freie Ende (5b) des Kolbens (5) ausgebildet ist, daß der Kolben (5) einen Dosierabschnitt (10) mit einer gegenüber dem Führungszylinder (4) verminderten Querschnitt aufweist, wobei der Dosierabschnitt (10) in Axialrichtung des Kolbens (5) kürzer als der Führungszylinder (4) ist und im Volumen der Querschnittsverminderung der definierten Dosiermenge entspricht, und daß der Kolbenhub so bemessen ist, daß der Dosierabschnitt (10) zwischen dem Vorratsraum (2) und der Öffnung (4a) der Ausgußdüse (4) hin und her bewegbar ist.

2. Dosiervorrichtung nach Anspruch 1, d a d u r c h g e k e n n z e i c h n e t , daß der Dosierabschnitt (10) durch eine einseitige oder allseitige Einschnürung des Kolbens (5) gebildet ist.

3. Dosiervorrichtung nach Anspruch 1 oder 2, d a d u r c h g e k e n n z e i c h n e t , daß am freien Ende (5b) des Kolbens (5) eine Kuppe oder Spitze (15b) angeformt ist.

4. Dosiervorrichtung nach einem der Ansprüche 1 bis 3, d a d u r c h g e k e n n z e i c h n e t , daß das Gehäuse (1) eine zusätzliche, mit der Ausgußdüse (4) fluchtende Kolbenlagerung (6) besitzt.

5. Dosiervorrichtung nach einem der Ansprüche 1 bis 4, d a d u r c h   g e k e n n z e i c h n e t ,   daß der Dosierabschnitt (10) in seiner Volumenausdehnung veränderbar ist.

6. Dosiervorrichtung nach einem der Ansprüche 1 bis 5, d a d u r c h   g e k e n n z e i c h n e t ,   daß im Gehäuse (21) mit einem einzigen Vorratsraum (22) mehrere Ausgußdüsen (24) mit jeweils einem eigenen Kolben (23) vorgesehen ist.

7. Dosiervorrichtung nach Anspruch 6, d a d u r c h   g e k e n n z e i c h n e t ,   daß die Kolben (23) unterschiedliche Dosierabschnitte (25) aufweisen.

FIG 1

FIG 2

FIG 3

FIG 4

FIG 5

0045927

Nummer der Anmeldung

EP 81 10 6072

**Europäisches Patentamt**

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>GB - A - 1 133 137</u> (SWEDACO PATENTS A.B.)<br><br>* Figuren 1-4,6,7,9-14; Seite 2, Zeilen 56-76; Seite 3, Zeilen 23-26 *<br><br>-- | 1-5 | G 01 F 11/16 |
| | <u>DE - A - 1 498 398</u> (NEVILLE et al.)<br>* Figur 1; Seite 9, Absatz 2 *<br><br>-- | 6 | |
| X | <u>GB - A - 777 795</u> (N.V. PHILIPS GLOEILAMPENFABRIEKEN)<br><br>* Seite 1, Zeilen 13-40; Figur 2; Seite 2, Zeilen 31-41; Seite 2, Zeilen 46-55 *<br><br>----- | 1-5 | **RECHERCHIERTE SACHGEBIETE (Int. Cl.³)**<br><br>G 01 F 11/14<br>11/16<br>11/18 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-11-1981 | NUYTEN |

EPA form 1503.1 06.78